# EUROPÄISCHE PATENTANMELDUNG

(11) **EP 2 698 551 A1**
(43) Veröffentlichungstag der Anmeldung: **19.02.2014**
(21) Anmeldenummer: 13180185.4
(22) Anmeldetag: 13.08.2013
(51) Int. Cl.: F16B 19/10, F16B 5/06

(54) **Befestigungsclip**

(30) Priorität: 17.08.2012 DE 102012016362
(71) Anmelder: TRW Automotive Electronics & Components GmbH, 78315 Radolfzell (DE)
(72) Erfinder: Loewe, Hubert, 66919 Weselberg (DE); Hofmann, Jürgen, 67304 Eisenberg (DE); Kröll, Philipp, 84416 Taufkirchen (DE); Hammer, Franz, 82110 Germering (DE); Lange, Carsten, 85778 Haimhausen (DE)
(74) Vertreter: Prinz & Partner

(57) **Zusammenfassung**

Bei einem Befestigungsclip (10) zur Befestigung eines Bauteils an einem Träger (24), insbesondere eines Verkleidungsteils (26) eines Kraftfahrzeugs an einem Karosserieblech, mit einem Verankerungselement (12), das in eine Öffnung (22) des Trägers (24) eingesetzt werden kann und Rastlaschen (38) aufweist, die in einer Rastposition an einem Rand der Öffnung (22) anliegen und/oder an diesem verrasten können, und mit einem Verriegelungselement (16), das mit dem Bauteil zusammenwirken kann, sich durch das Verankerungselement (12) hindurch erstreckt und relativ zu diesen zwischen einer Montagestellung und einer Verriegelungsstellung, in der das Verriegelungselement (16) die Rastlaschen (38) in der Rastposition fixiert, verschiebbar ist, sind am Verankerungselement (12) Halteelemente (40) vorgesehen, wobei das Verriegelungselement (16) die Halteelemente (40) bei einer Bewegung des Verriegelungselements (16) von der Verriegelungsstellung in die Montagestellung radial nach außen in eine Halteposition drängt, in der diese am Rand der Öffnung (22) angreifen.

## Beschreibung

Die Erfindung betrifft einen Befestigungsclip zur Befestigung eines Bauteils an einem Träger, insbesondere eines Verkleidungsteils eines Kraftfahrzeugs an einem Karosserieblech, mit einem Verankerungselement, das in eine Öffnung des Trägers eingesetzt werden kann und Rastlaschen aufweist, die in einer Rastposition an einem Rand der Öffnung anliegen und/oder an diesem verrasten können, und mit einem Verriegelungselement, das mit dem Bauteil zusammenwirken kann, sich durch das Verankerungselement hindurch erstreckt und relativ zu diesen zwischen einer Montagestellung und einer Verriegelungsstellung, in der das Verriegelungselement die Rastlaschen in der Rastposition fixiert, verschiebbar ist.

Zweiteilige Befestigungsclips weisen ein Verankerungselement auf, das in eine Öffnung eines Trägers eingesetzt und in dieser verankert werden kann, sowie ein Verriegelungselement, das zwischen einer Montagestellung und einer Verriegelungsstellung beweglich am Verankerungselement gelagert ist. Am Verriegelungselement kann zum einen ein Bauteil, beispielsweise ein Verkleidungsteil, befestigt werden. Zum anderen fixiert das Verriegelungselement das Verankerungselement im Träger, indem das Verriegelungselement in einer Verriegelungsstellung die Rastlaschen des Verankerungselements blockiert, sodass diese in einer Rastposition, in der diese das Verankerungselement in der Öffnung halten, fixiert werden.

Zur Demontage des Befestigungsclips muss das Verriegelungselement erst aus dieser Verriegelungsstellung in die Montagestellung bewegt werden, in der die Rastlaschen freigegeben sind. Am Befestigungsclip sind üblicherweise zusätzliche Fixierelemente vorgesehen, die das Verriegelungselement in der Verriegelungsstellung fixieren. Um das Verriegelungselement aus der Verriegelungsstellung in die Montagestellung zu bewegen, muss erst der Widerstand dieser Fixierelemente überwunden werden. Beim Bewegen des Verriegelungselements in die Montagestellung kann das Verankerungselement aber aufgrund des Widerstandes der Fixierelemente teilweise mit diesem mitbewegt und somit das Verankerungselement aus der Öffnung herausgezogen werden. Bei einer wiederholten Bewegung kann dies zu einem vorzeitigen Verschleiß der Rastlaschen führen, wodurch eine ausreichende Fixierung des Befestigungsclips in der Öffnung nicht mehr gewährleistet ist.

Aufgabe der Erfindung ist es, einen zweiteiligen Befestigungsclip bereitzustellen, der eine sichere Fixierung des Verankerungselements an einem Träger, auch bei einer Bewegung des Verriegelungselements von der Verriegelungsstellung in die Montagestellung, gewährleistet.

Zur Lösung der Aufgabe sind bei einem Befestigungsclip der eingangs genannten Art am Verankerungselement Halteelemente vorgesehen, wobei das Verriegelungselement die Haltearme bei einer Bewegung des Verriegelungselements von der Verriegelungsstellung in die Montagestellung radial nach außen in eine Halteposition drängt, in der diese am Rand der Öffnung angreifen. Durch die Halteelemente wird während des Verschiebevorgangs des Verriegelungselements von der Verriegelungsstellung in die Montagestellung eine zusätzliche Haltekraft bereitgestellt, um das Verankerungselement in der Öffnung zu fixieren, so dass das Verankerungselement sicher am Träger gehalten ist. Eine Beschädigung des Verankerungselements bzw. der Rastlaschen des Verankerungselements ist sicher ausgeschlossen, so dass eine langfristige, zuverlässige Fixierung des Verankerungselements am Träger und somit eine zuverlässige Funktion des Befestigungsclips gewährleistet ist, auch bei wiederholter Betätigung.

Um die Halteelemente radial nach außen in die Halteposition zu drängen, kann das Verriegelungselement beispielsweise radial vorstehende Vorsprünge aufweisen. Die Vorsprüngen stehen in Längsrichtung des Befestigungsclips betrachtet über die radiale Innenseite der Halteelemente vor, so dass die Vorsprünge beim Verschieben des Verriegelungselements von der Verriegelungsstellung in die Montagestellung mit der radialen Innenseite der Halteelemente in Anlage gelangen und beim weiteren Verschieben radial nach außen drängen können.

Um das Verriegelungselement in der Verriegelungsstellung zu fixieren, sind beispielsweise am Verankerungselement und am Verriegelungselement zusammenwirkende Rastelemente vorgesehen, die das Verriegelungselement in der Verriegelungsstellung und/oder der Montagestellung halten, wobei die Rastelemente des Verriegelungselements insbesondere an die Vorsprünge angrenzen. Die Rastelemente können beispielsweise durch eine radiale Einschnürung vor bzw. hinter den Vorsprüngen gebildet sein. Da die Rastelemente und die Vorsprünge aneinander angrenzen, werden die Halteelement beim Verschieben des Verriegelungselements unmittelbar radial nach außen gedrängt, so dass sehr früh eine entsprechend höhere Haltekraft für das Verankerungselement am Träger bereitgestellt wird.

Die Rastelemente des Verankerungselements können auch an den Halteelementen vorgesehen sein. Die Rastelemente des Verankerungselements werden bei einer Bewegung des Verriegelungselements in die Montagestellung zum Lösen des Verriegelungselements radial nach außen gedrängt, sodass die Halteelemente zwangsweise mit diesen radial nach außen gedrängt werden.

Die Rastlaschen können beispielsweise radial nach außen weisende Rastschrägen aufweisen, sodass die Rastlaschen auch bei verschieden großen Öffnungen bzw. verschieden dicken Trägern sicher am Rand der Öffnung anliegen können und so das Verankerungselement fixieren können.

Um die Öffnung im Bauteil abzudichten, kann am Verankerungselement ein radial umlaufendes Dichtungselement vorgesehen sein, die mit einer ersten Dichtlippe am Träger anliegt und die Öffnung abdichtet.

Das Dichtungselement kann auch eine zweite radial umlaufende Dichtlippe aufweisen, die in der Verriegelungsposition des Verriegelungselements in Umfangsrichtung umlaufend am Verriegelungselement und/oder am Bauteil anliegt. Durch diese zweite Dichtlippe ist eine zusätzliche Abdichtung möglich, sodass durch Öffnungen am Verriegelungselement kein Wasser in den Zwischenraum zwischen Bauteil und Träger eindringen kann. Da das Verriegelungselement von der Montageposition in die Verriegelungsposition in das Verankerungselement eingeschoben wird, wird das Verriegelungselement oder das Bauteil bei dieser Bewegung gegen die zweite Dichtlippe bewegt.

Um das Bauteil am Verriegelungselement zu befestigen, ist vorzugsweise am Verriegelungselement eine Aufnahme für das Bauteil vorgesehen, die zumindest einen kreisförmigen Flansch aufweist. Das Bauteil kann mit einer Aussparung oder Öffnung auf diesen Flansch aufgeschoben werden, wobei ein kreisförmiger Flansch den Vorteil bietet, dass das Bauteil drehbar am Flansch gelagert ist und somit beliebig um die Längsachse des Befestigungsclip verschwenkt werden kann. Eine Ausrichtung des Befestigungsclips bei der Montage ist somit nicht erforderlich.

An diesem Flansch kann zumindest ein Federelement vorgesehen sein, das am Bauteil anliegt und dieses am Verriegelungselement fixiert. Durch das Federelement wird das Bauteil beispielsweise gegen ein anderes Element der Aufnahme gedrängt und somit zwischen dem Federelement und dem Element geklemmt. Dadurch kann das Bauteil zudem spielfrei gehalten werden, wodurch eine Geräuschbildung durch ein Klappern des Bauteils am Verriegelungselement verhindert werden kann. Das Federelement kann insbesondere durch eine in Umfangsrichtung umlaufende Federlippe gebildet sein.

Um eine mittige Zentrierung bzw. eine gleichmäßige Verteilung der Haltekraft am Rand der Öffnung zu erzielen, sind die Rastlaschen und/oder die Halteelemente vorzugsweise paarweise in Umfangsrichtung gegenüberliegend am Verankerungselement angeordnet.

Die Halteelemente können separat von den Rastlaschen am Verankerungselement angeordnet und insbesondere in Umfangsrichtung um 90° versetzt zu diesen angeordnet sein, sodass die Haltekraft in Umfangsrichtung gleichmäßig auf den Rand der Öffnung verteilt ist.

Optional kann eine Abdeckkappe vorgesehen sein, die auf das Verriegelungselement aufgesetzt werden kann und dieses im Verankerungselement fixiert, sodass ein versehentliches Abziehen des Verriegelungselements bzw. ein Verlieren des Verriegelungselements vor der Montage verhindert werden kann.

Weitere Vorteile und Merkmale ergeben sich aus der nachfolgenden Beschreibung in Verbindung mit den beigefügten Zeichnungen. In diesen zeigen:
- Figur 1 eine Explosionsansicht eines erfindungsgemäßen Befestigungsclips,
- Figur 2 den Befestigungsclip aus Figur 1 in eingebautem Zustand,
- Figuren 3a und 3b perspektivische Ansichten des Verankerungselements des Befestigungsclips aus Figur 1,
- Figuren 4a und 4b perspektivische Ansichten des Verriegelungselements des Befestigungsclips aus Figur 1,
- Figuren 5a und 5b Schnittansichten durch den Befestigungsclip aus Figur 1 in einer Montagestellung des Verriegelungselements, und
- Figuren 6a und 6b Schnittansichten durch den Befestigungsclip aus Figur 1 in einer Verriegelungsstellung des Verriegelungselements.

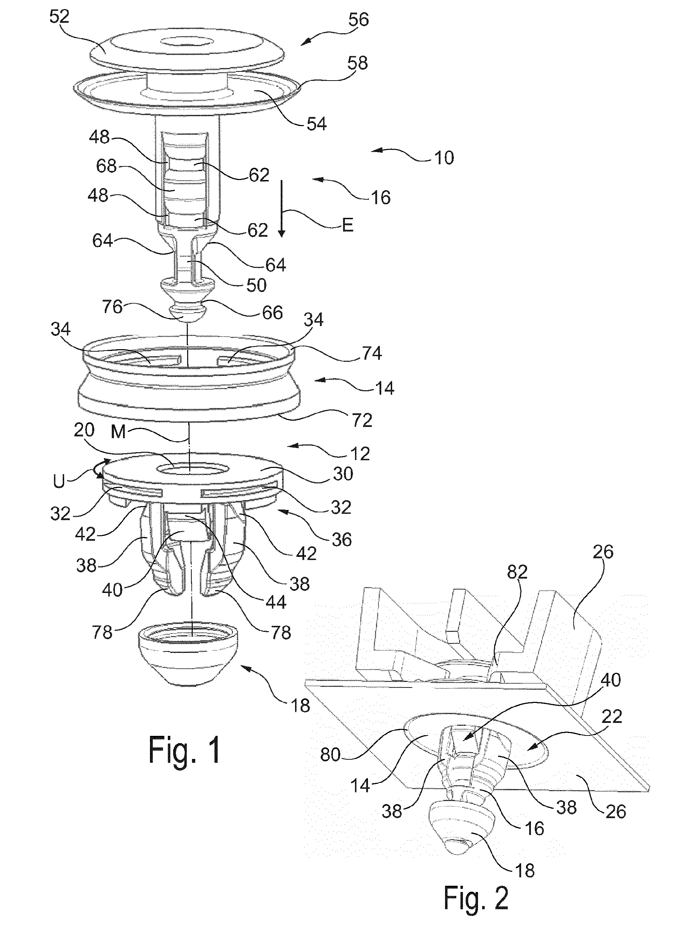

In Figur 1 ist ein Befestigungsclip 10 mit einem Verankerungselement 12, an dem ein Dichtungselement 14 vorgesehen ist, sowie einem Verriegelungselement 16 und einer Abdeckkappe 18 gezeigt.

Am Verriegelungselement 16 kann, wie in Figur 2 zu sehen ist, ein Bauteil, beispielsweise ein Verkleidungsteil 26, befestigt werden, das durch den Befestigungsclip 10 an einem Träger 24 montiert werden kann. Das Verankerungselement 12 kann dazu in eine Öffnung 22 eines Trägers 24 eingesetzt und in dieser fixiert werden und weist eine Aufnahme 20 auf, in die das Verriegelungselement 16 eingeschoben werden kann.

Neben der Befestigung des Bauteils hat das Verriegelungselement 16 die Funktion, das Verankerungselement 12 im Träger 24 zu fixieren, indem, wie im Folgenden erläutert wird, Rastlaschen 38, die am Verankerungselement 12 vorgesehen sind, in einer Rastposition fixiert werden.

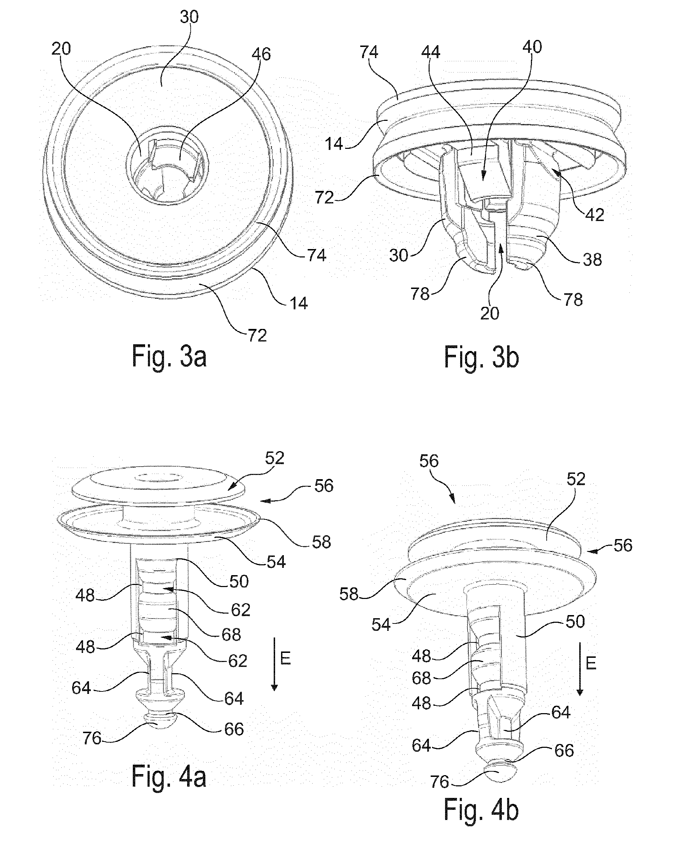

Wie in den Figuren 3a und 3b zu sehen ist, hat das Verankerungselement 12 einen zylindrischen Grundköper 30, in dem die Aufnahme 20 in Zylinderlängsrichtung vorgesehen ist. Das Dichtungselement 14 ist in Umfangsrichtung U um den Grundkörper 30 umlaufend an diesem befestigt, wobei am Grundkörper 30 in Umfangsrichtung verlaufende Halteschlitze 32 vorgesehen sind, in die entsprechende Vorsprünge 34 des Dichtungselements 14 eingreifen können (siehe Figur 1).

Auf der Unterseite 36 des Verankerungselements 12 sind zwei bezüglich der Mittelachse M des Befestigungsclips 10 radial gegenüberliegende Rastlaschen 38 vorgesehen sowie zwei in Umfangsrichtung U bezüglich der Rastlaschen um 90° versetzte Halteelemente 40, die ebenfalls paarweise gegenüberliegend um die Aufnahme 20 herum angeordnet sind.

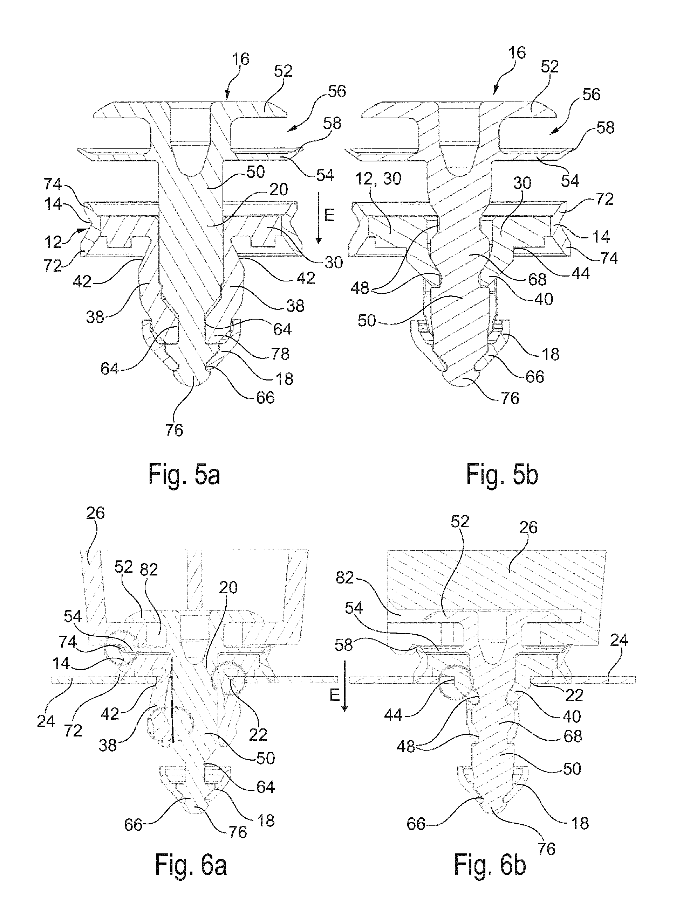

Wie insbesondere in Figur 3b zu sehen ist, weisen die Rastlaschen 38 radial nach außen weisende Rastschrägen 42 auf, die sich in eine Einschubrichtung E radial nach außen erstrecken. Die Außenflächen 44 der Halteelemente 40 verlaufen im nicht eingebauten Zustand parallel zur Einschubrichtung E (siehe auch Figur 5b).

Wie in Figur 3a zu sehen ist, sind in der Aufnahme 20 radial nach innen gerichtete Rastelemente 46 vorgesehen, die mit entsprechenden Rastelementen 48 des Verriegelungselements 16 (siehe Figuren 4a und 4b) zusammenwirken können.

Wie insbesondere in Figur 5b zu sehen ist, sind die Rastelemente 46 hier an den Halteelementen 40 angeordnet. Es ist aber möglich, dass diese separat von den Halteelemente 40 am Grundkörper 30 des Verankerungselements 12 angeordnet sind.

Das Verriegelungselement 16 weist einen in Einschubrichtung E verlaufenden Pin 50 auf, der in die Aufnahme 20 des Verankerungselements 12 eingeschoben werden kann, sowie eine aus zwei Flansche 52, 54 gebildete Aufnahme 56 für das Bauteil.

Beide Flansche 52, 54 sind parallel zueinander und senkrecht zur Einschubrichtung E angeordnet und kreisförmig ausgebildet. Der erste, in Einschubrichtung E hintere Flansch 52 weist eine ebene Unterseite auf. Am zweiten Flansch 54 ist eine in Umfangsrichtung U umlaufende Federlippe 58 vorgesehen, die in Richtung zum ersten Flansch 52 vorsteht.

Am Pin 50 sind zwei in Einschubrichtung E voneinander beabstandete Einschnürungen 62 vorgesehen, die jeweils ein Rastelement 48 bilden, das mit den Rastelementen 46 des Verankerungselements 12 zusammenwirken kann. Zwischen den Rastelementen 48 ist ein in Umfangsrichtung U umlaufender Vorsprung 68 vorgesehen, der in radialer Richtung über die Rastelemente 48 vorsteht.

Des Weiteren sind in Einschubrichtung E vor den Rastelementen 48 Aussparungen 64 vorgesehen, in die die Rastlaschen 38 des Verankerungselements 12 einfedern können, sowie eine am in Einschubrichtung E vorderen Ende 76 eine umlaufende Nut 66, an der die Abdeckkappe 18 montiert werden kann.

In den Figuren 5a und 5b ist der Befestigungsclip 10 in einem Vormontagezustand gezeigt, in dem das Verriegelungselement 16 in die Aufnahme 20 des Verankerungselements 12 eingeschoben ist und sich in einer Montagestellung befindet, in der die Rastlaschen 38 zwischen einer Freigabeposition und einer Halteposition (siehe Figur 6a) frei beweglich ist.

Die Schnittansichten 5a und 5b sind jeweils bezüglich der Mittelachse M um 90° versetzt angeordnet, sodass in Figur 5a ein Schnittansicht durch die Rastlaschen 38 und in Figur 5b durch die Halteelemente 40 des Verankerungselements 12 gezeigt ist.

Der Pin 50 des Verriegelungselements 16 erstreckt sich in der Montagestellung durch die gesamte Aufnahme 20 und ragt auf der Unterseite 36 aus dem Verankerungselement 12 heraus. Die Rastlaschen 38 befinden sich in der Montagestellung in den Aussparungen 64 des Verriegelungselements 16. Die Abdeckkappe 18 ist auf das Ende 76 des Pins ausgeschoben und an der Nut 66 gehalten.

Die Abdeckkappe 18 ist konisch ausgebildet und umschließt in der Montagestellung des Verriegelungselements 16 die vorderen Enden 78 der Rastlaschen 38 in Umfangsrichtung U, sodass diese nicht radial nach außen aufgebogen werden können. Zudem deckt die Abdeckkappe 18 die Rastlaschen 38 entgegen der Einschubrichtung E ab. Dadurch sind die Rastlaschen 38 geschützt, so dass ein versehentliches Hängenbleiben der Rastlaschen 38 am Rand 80 der Öffnung (siehe Figuren 6a und 6b) bei der Montage des Verankerungselements 12 im Träger 24 sicher verhindert.

Wie in Figur 5b zu sehen ist, sind die Rastelemente 46 des Verankerungselements 12 in den bezüglich der Einschubrichtung E vorderen Rastelementen 48 des Verriegelungselements 16 verrastet, sodass das Verriegelungselement 16 in der Montagestellung gehalten wird.

Zur Montage des Befestigungsclips 10 wird das Verankerungselement 12 in eine Öffnung 22 des Trägers 24 eingeschoben (Figuren 6a und 6b). Anschließend wird das Verkleidungsteil 26 am Verriegelungselement 16 montiert, indem das Verkleidungsteil 26 in radialer Richtung mit einer Aussparung 82 auf die Flansche 52, 54 aufgeschoben wird, sodass das Verkleidungsteil zwischen den Flanschen 52, 54 geklemmt wird. Durch die Federlippe 58 wird das Verkleidungsteil 26 gegen den ersten Flansch 52 gedrängt und so spielfrei am Verriegelungselement 16 gehalten. Die Federlippe 58 bewerkstelligt dabei einen Toleranzausgleich zwischen dem Verkleidungsteil 26 und dem Verriegelungselement 16.

Anschließend wird das Verriegelungselement 16 in Einschubrichtung E verschoben, bis die Rastelemente 46 des Verankerungselements 12 an den bezüglich der Einschubrichtung E hinteren Rastelementen 48 des Verriegelungselements 16 verrasten (Figur 6b).

Wie in Figur 6a zu sehen ist, werden in dieser Verriegelungsstellung die Rastlaschen 38 radial nach außen bewegt, sodass diese gegen am Rand 80 der Öffnung 22 des Trägers 24 angreifen und das Verankerungselement 12 bzw. den Befestigungsclip 10 in der Öffnung 22 fixieren.

Die Rastlaschen 38 können bereits vor dem Einschieben des Verriegelungselements 16 am Rand der Öffnung anliegen bzw. an diesem verrasten. Es ist aber auch denkbar, dass die Rastlaschen erst durch das Einschieben des Verriegelungselements 16 am Rand 80 verrasten.

Wie in den Figuren 6a und 6b zu sehen ist, weist das Dichtungselement 14 eine erste Dichtlippe 72 auf, die in Umfangsrichtung U umlaufend am Träger 24 anliegt und so die Öffnung 22 vollständig abdichtet. Des Weiteren ist eine zweite Dichtlippe 74 vorgesehen, die in der Verriegelungsposition am Flansch 54 bzw. am Verkleidungsteil 26 anliegt und das Verankerungselement 12 zum Verriegelungselement 16 bzw. zum Verkleidungsteil 26 hin abdichtet. Weiterhin gewährleistet die Dichtlippe 74, dass Wasser, falls es entlang des Pins 50 von der Spitze durch Clips durch die Aufnahme 20 hin zum Flansch 54 gelangt, dort gestoppt wird, da die Dichtlippe 74 am Flansch 54 zuverlässig abdichtet.

Zur Demontage des Verkleidungsteils 26 bzw. des Befestigungsclips 10 wird das Verriegelungselement 16 entgegen der Einschubrichtung E von der Verriegelungsstellung (Figuren 6a und 6b) in die Montagestellung (Figuren 5a und 5b) gezogen, wodurch die Rastlaschen 38 nicht mehr vom Verriegelungselement 16 in der Rastposition fixiert werden und/oder zurück in eine Freigabeposition federn können, so dass der Befestigungsclip 10 aus der Öffnung 22 entnommen werden kann.

Problematisch ist dabei, dass während dieses Verschiebevorgangs des Verriegelungselements 16 von der Verriegelungsstellung in die Montagestellung die durch die Rastlaschen 38 bereitgestellte Haltekraft des Verankerungselements 12 nachlässt, da die Rastlaschen 38 bereits während dieses Verschiebevorganges radial nach innen wegfedern können. Zudem wird das Verriegelungselement 16 aber durch die zusammenwirkenden Rastelemente 46, 48 am Verankerungselement 12 gehalten. Dies kann dazu führen, dass das Verankerungselement 12 bereits vor dem Erreichen der Montagestellung des Verriegelungselements 16 gemeinsam mit dem Verriegelungselement 16 aus der Öffnung 22 herausgezogen werden kann, wodurch die Rastlaschen 38, insbesondere bei mehrmaligem Wiederholen dieses Vorgangs, abgenutzt oder beschädigt werden können.

Um dies zu verhindern, ist zwischen den Rastelementen 48, in denen die Rastelemente 46 des Verankerungselements in der Montagestellung (Figur 5b) bzw. der Verriegelungsstellung (Figur 6b) verrasten, ein Vorsprung 68 vorgesehen, der beim Verschieben des Verriegelungselements von der Verriegelungsstellung in die Montagestellung die Halteelemente 40 radial nach außen in eine Halteposition drängt, die in den Figuren 6a und 6b jeweils durch eine gestrichelte Linie angedeutet ist.

In dieser Halteposition greifen die Halteelemente 40 am Rand der Öffnung 22 an, sodass durch diese eine erhöhte Haltekraft für das Verankerungselement 12 in der Öffnung 22 bereitgestellt wird und ein Abziehen des Verankerungselements 12 aus der Öffnung 22 sicher verhindert wird.

Ist das Verriegelungselement 16 in der Montagestellung angelangt, können die Rastelemente 46 in die Aussparungen 64 zurückfedern, sodass die Halteelemente 40 ebenfalls zurück in ihre Ausgangsposition bewegt werden können, wodurch eine geringere Haltekraft bereitgestellt wird und eine Demontage des Verankerungselements 12 möglich ist.

Wie in den Figuren 4a und 4b bzw. 5b und 6b zu sehen ist, grenzen die Vorsprünge 68 direkt an die Rastelemente 48 des Verriegelungselements 16 an, sodass bereits bei einer geringen Bewegung des Verriegelungselements 16 gegen das Verankerungselement 12 umgehend eine Bewegung der Rastelemente 46 bzw. der Halteelemente 40 radial nach außen und somit eine Fixierung des Verankerungselements in der Öffnung 22 erfolgt.

Die Vorsprünge 68 können aber auch an einer beliebigen anderen Stelle des Verriegelungselements 16 angeordnet sein. Es ist lediglich sicherzustellen, dass die Halteelemente 40 durch die Vorsprünge 68 radial nach außen gegen den Rand 80 der Öffnung 22 gedrängt werden. Es sind auch Ausführungsformen denkbar, bei welchen die Halteelemente 40 durch andere Vorrichtungen radial nach außen bewegt werden können. Insbesondere müssen die Halteelemente 40 nicht an den Rastelementen 46 des Verankerungselements 12 angeordnet sein.

Wie in den Figuren 5a und 5b zu sehen ist, weisen die Rastlaschen 38 radial nach außen weisende Rastschrägen 42 auf, durch die eine Montage des Befestigungsclips 10 in verschieden große Öffnungen 22 bzw. in verschieden dicken Trägern 24 möglich ist. Zudem erleichtern diese das Abziehen des Verankerungselements 12 aus der Öffnung 22, da bei einer Bewegung entgegen der Einschubrichtung E die Rastlaschen 38 vom Rand 80 der Öffnung 22 radial nach innen gedrängt werden können.

Die Halteelemente 40 sowie die Rastlaschen 38 sind hier paarweise gegenüberliegend angeordnet, sodass das Verankerungselement 12 mittig in der Öffnung 22 zentriert wird. Die Rastlaschen 38 bzw. die Halteelemente 40 können aber auch anders positioniert sein. Insbesondere können auch mehrere Rastlaschen 38 bzw. mehrere Halteelemente 40 vorgesehen sein.

## Patentansprüche

1. Befestigungsclip (10) zur Befestigung eines Bauteils an einem Träger (24), insbesondere eines Verkleidungsteils (26) eines Kraftfahrzeugs an einem Karosserieblech, mit einem Verankerungselement (12), das in eine Öffnung (22) des Trägers (24) eingesetzt werden kann und Rastlaschen (38) aufweist, die in einer Rastposition an einem Rand der Öffnung (22) anliegen und/oder an diesem verrasten können, und mit einem Verriegelungselement (16), das mit dem Bauteil zusammenwirken kann, sich durch das Verankerungselement (12) hindurch erstreckt und relativ zu diesen zwischen einer Montagestellung und einer Verriegelungsstellung, in der das Verriegelungselement (16) die Rastlaschen (38) in der Rastposition fixiert, verschiebbar ist, **dadurch gekennzeichnet, dass** am Verankerungselement (12) Halteelemente (40) vorgesehen sind, wobei das Verriegelungselement (16) die Halteelemente (40) bei einer Bewegung des Verriegelungselements (16) von der Verriegelungsstellung in die Montagestellung radial nach außen in eine Halteposition drängt, in der diese am Rand der Öffnung (22) angreifen.

2. Befestigungsclip nach Anspruch 1, **dadurch gekennzeichnet, dass** das Verriegelungselement (16) radial vorstehende Vorsprünge (68) aufweist, an welchen die Halteelemente (40) bei einer Bewegung des Verriegelungselements (16) von der Verriegelungsstellung in die Montagestellung anliegen und die die Halteelemente (40) radial nach außen drängen.

3. Befestigungsclip nach Anspruch 1 oder 2, **dadurch gekennzeichnet, dass** am Verankerungselement (12) und am Verriegelungselement (16) zusammenwirkende Rastelemente (46, 48) vorgesehen sind, die das Verriegelungselement (16) in der Verriegelungsstellung und/oder der Montagestellung halten, wobei die Rastelemente (48) des Verriegelungselements (16) insbesondere an die Vorsprünge (68) angrenzen.

4. Befestigungsclip nach Anspruch 3, **dadurch gekennzeichnet, dass** die Rastelemente (46) des Verankerungselements (12) an den Halteelementen (40) vorgesehen sind.

5. Befestigungsclip nach einem der vorhergehenden Ansprüche, **dadurch gekennzeichnet, dass** die Rastlaschen (38) radial nach außen weisende Rastschrägen (42) aufweisen.

6. Befestigungsclip nach einem der vorhergehenden Ansprüche, **dadurch gekennzeichnet, dass** am Verankerungselement (12) ein radial umlaufendes Dichtungselement (14) vorgesehen ist, die mit einer ersten Dichtlippe (72) am Träger (24) anliegt und die Öffnung (22) abdichtet.

7. Befestigungsclip nach Anspruch 6, **dadurch gekennzeichnet, dass** das Dichtungselement (14) eine zweite radial umlaufende Dichtlippe (74) aufweist, die in der Verriegelungsposition des Verriegelungselements (16) in Umfangsrichtung (U) umlaufend am Verriegelungselement (16) und/oder am Bauteil anliegt.

8. Befestigungsclip nach einem der vorhergehenden Ansprüche, **dadurch gekennzeichnet, dass** am Verriegelungselement (16) eine Aufnahme (56) für das Bauteil vorgesehen ist, die zumindest einen kreisförmigen Flansch (52, 54) aufweist.

9. Befestigungsclip nach Anspruch 8, **dadurch gekennzeichnet, dass** am Flansch (52, 54) zumindest ein Federelement, insbesondere eine in Umfangsrichtung (U) umlaufende Federlippe (58), vorgesehen ist, das am Bauteil anliegt und dieses am Verriegelungselement (16) fixiert.

10. Befestigungsclip nach einem der vorhergehenden Ansprüche, **dadurch gekennzeichnet, dass** die Rastlaschen (38) und/oder die Halteelemente (40) paarweise in Umfangsrichtung (U) gegenüberliegend angeordnet sind.

11. Befestigungsclip nach einem der vorhergehenden Ansprüche, **dadurch gekennzeichnet, dass** die Halteelemente (40) separat von den Rastlaschen (38) am Verankerungselement (12) angeordnet sind und insbesondere in Umfangsrichtung (U) um 90° versetzt zu diesen angeordnet sind

12. Befestigungsclip nach einem der vorhergehenden Ansprüche, **dadurch gekennzeichnet, dass** eine Abdeckkappe (18) vorgesehen ist, die auf das Verriegelungselement (16) aufgesetzt werden kann und dieses im Verankerungselement (12) fixiert.
